Europäisches Patentamt

European Patent Office

Office européen des brevets

(11) Publication number: **0 156 529**
A1

# EUROPEAN PATENT APPLICATION

(21) Application number: 85301369.6

(22) Date of filing: 28.02.85

(51) Int. Cl.⁴: **G 01 C 13/00**
G 01 S 15/88, G 01 S 17/42
B 63 B 49/00

(30) Priority: 28.02.84 GB 8405099

(43) Date of publication of application:
02.10.85 Bulletin 85/40

(84) Designated Contracting States:
IT

(71) Applicant: DONNELLY, CONNOLLY & POOTS (N.I.)
LIMITED
37 Malone Road
Belfast BT9 6RX Northern Ireland(GB)

(72) Inventor: Donnelly, Karl
2 Melmore Drive The Cutts
Derriaghy Belfast BT17 9HT(GB)

(74) Representative: Huskisson, Frank Mackie et al,
FITZPATRICKS 4 West Regent Street
Glasgow G2 1RS Scotland(GB)

(54) Hydrographic survey apparatus.

(57) Hydrographic survey apparatus includes in combination an echo-sounder (26) and a telemetry unit (28) in circuit, together with a target prism arrangement (30) for location on board a remote radio controlled water craft (10). The echo-sounder (26), telemetry unit (28) and target prism arrangement (30) are housed in a module (24) removably located in said craft (10). The craft (10) is power driven and directionally manouvrable. Power means (18) to energise said circuit is mounted in the craft (10).

A micro-processsor (56) and graph plotter (54) are in circuit with the tacheometer (44) and the telemetry unit (28) and tacheometer (44) are simultaneously activated by a signal from said micro-processor (56) and readings obtained and plotted.

Fig.2.

Croydon Printing Company Ltd.

# HYDROGRAPHIC SURVEY APPARATUS

This invention relates to apparatus for conducting hydrographic surveys of, for example harbour and in-shore waterways.

Mobilisation costs, manpower and the expense of operating and maintaining survey vessels and their equipment are high, and consequently inshore charting has been neglected with the authorities concentrating mainly on surveying shipping channels and ignoring the estuaries and their attendant inlets.

Present inshore survey methods employ conventional instruments, which are sighted on to a target prism, mounted on a dinghy or small cabin cruiser which has been fitted with an echo-sounder. The information from the sounder and the shore station are collated on-shore for subsequent processing and plotting.

This present method is time-consuming and requires a team of four, two on shore to track the target prism and record data and plot track of the survey vessel and the other two to steer the boat, monitor the echo-sounder and mark its chart as well as ensuring adequate coverage of the area to be surveyed. This present method due to the manpower and time required is expensive, and it is an object of the present invention to provide apparatus which, in use, requires less manpower and is less time-consuming than the apparatus currently used.

In accordance with the present invention, hydrographic survey apparatus includes in combination an echo-sounder and a telemetry unit in circuit, together with a target prism arrangement for location on board a water craft which is power driven and directionally manouvrable, and power means to energise said circuit.

Preferably, the echo-sounder, telemetry unit and target prism arrangement are housed in a module removably located in said craft. Power means may also be located in said module.

Preferably also, the craft is navigated by remote 0156529 radio control from position-fixing instrument positioned on shore. The instrument is preferably an electronic tacheometer.

Preferably further, the target prism arrangement is carried at the top of an extendible mast.

An embodiment of the present invention will now be described, by way of example, with reference to the accompanying drawings, in which:-

Fig. 1 is a diagrammatic pictorial representation of the layout of hydrographic survey apparatus according to the present invention;

Fig. 2 is a vertical cross-sectional view of a module to be located in or suspended out from a water craft of the apparatus;

Fig. 3 is a diagrammatic longitudinal cross-sectional view of the water craft having the module located therein; and

Fig. 4 is a diagrammatic transverse cross-sectional view of the water craft having the module suspended out therefrom.

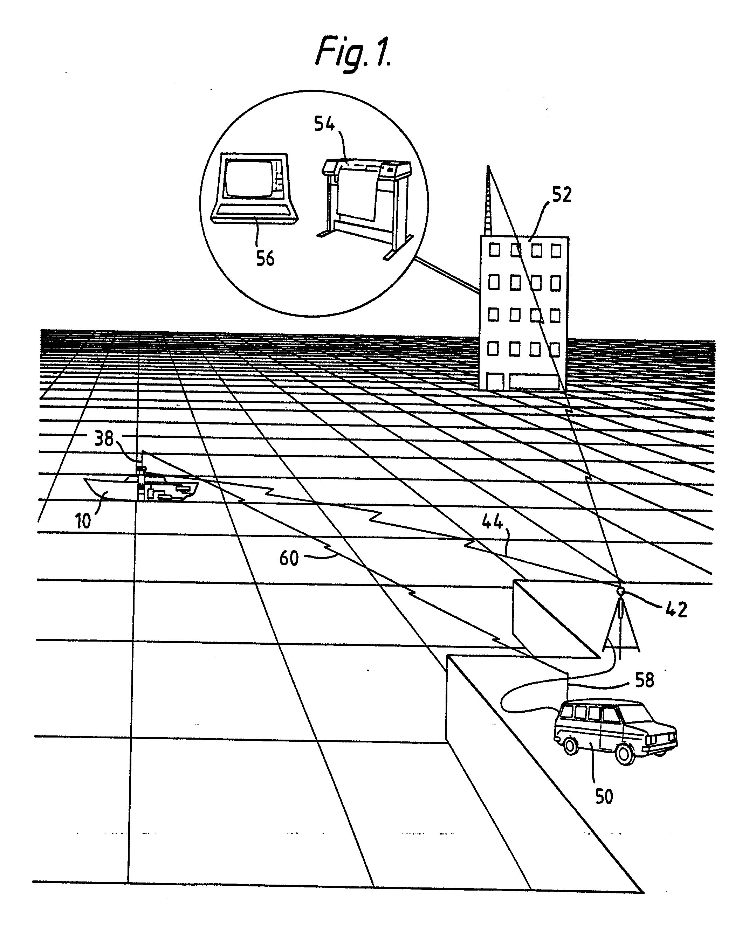

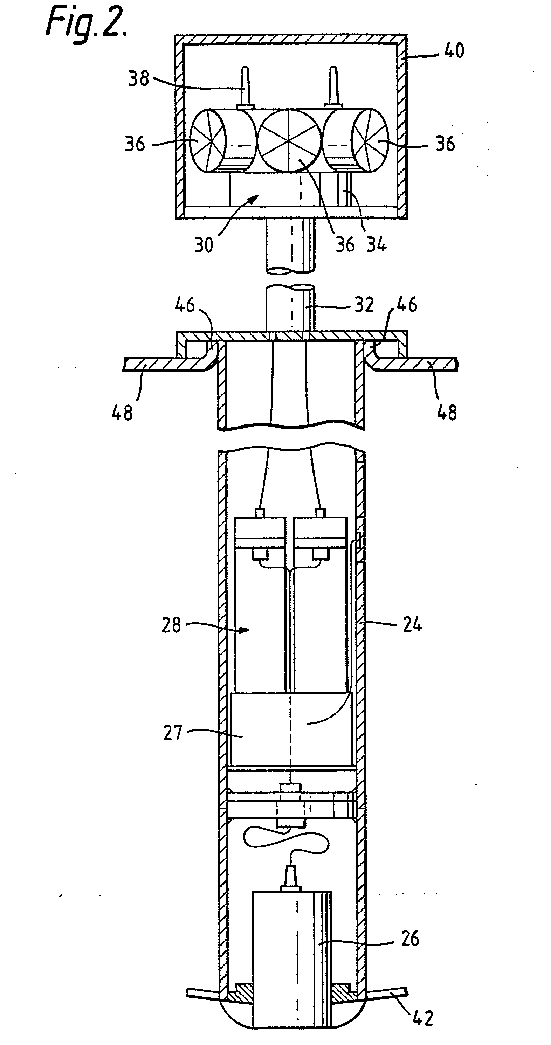

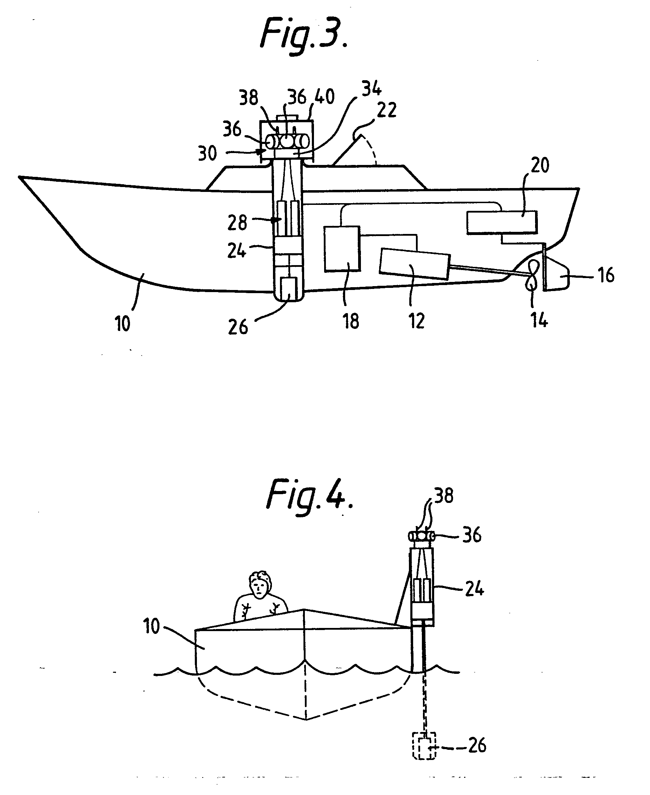

Referring to the drawings, hydrographic survey apparatus includes a water craft 10 in which an inboard motor 12 is mounted with the propeller shaft carrying on the outside of the craft the propeller 14 with a rudder 16 therebehind. The water craft is to be propelled through the water by remote radio control and motor 12 is driven by a power pack 18 as shown in Fig. 3. Movement of the rudder 16 is controlled by a servo control unit 20 also powered by pack 18. The craft 10 has an inspection/access hatch 22. Provision is made in the craft to receive a removable module 24 in which is housed in vertical spaced relation, an echo-sounder 26, computer interface 27, a telemetry unit 28 and a target prism arrangement 30. The target prism arrangement 30 is mounted on an extendible mast 32 as shown in Fig. 2. The arrangement 30 comprises a cylindrical body 34 around the periphery of which an array of prisms 36 is provided as shown. From the top of the body 34, antennae 38 for the telemetry unit 28 upstand. When not in use, a cover 0156529 placed over the arrangement 30. The echo-sounder 26 is positioned protruding below the keel 42 of the craft 10 as shown in Fig. 2. The echo-sounder 26, computer interface 27, telemetry unit 28 and antennae 38 are in circuit with the power pack 18. The arrangement 30 is a multi-directional retro-reflector which acts as a passive target for infra-red signals 44 sent from a shore instrument which is an electronic tacheometer 44 (Fig. 1) mounted on a stand or tripod. The module 24 is supported in position on the craft by a flange adaptor 46 which allows raising and lowering of the module 24 to a calibrated position. The adaptor 46 upstands from the deck 48 of the craft 10.

Instead of the power pack 18 being located in the craft, it can be provided in the module above the telemetry unit 28.

The survey water craft is just over five feet, approximately 1.52 meters, in length.

In use, the craft is launched into the water and at the shore station the tacheometer 42 is locked on to the prism array 36 of the module 24 and will automatically track the craft's progress using its own infra-red beam as a detector. The telemetry unit 28 transmits to an antennae 58 depth information on demand from the shore station.

The module 24 can be split for outboard operations in other boats and this can occur at the lower part of the module as shown in Fig. 4. Alternatively, the module is not split but is made water proof and is lowered into the water with the mast carrying the target prism arrangement extended. With the module the position/depth components, i.e. bearing, distance, vertical angle and distance from the target to the sea-bed are processed in real time to provide spatial co-ordinates (X,Y,Z) of the surveyed points.

A small micro-processor 56 is provided and acts as a guidance system, a timing device, a data storage unit and a data processor. It is programmed to initialise a 'Data Collect' signal 60 to the telemetric unit 28 at predetermined intervals and to accept valid input or reject spurious or incomplete data.

A continuous monitoring of the vessel's progress and position is provided by a small graph plotter 54 provided with the micro-processor 56 in a mobile office 50 or a site office in a building 52 if it is in telemetric range and this provides the operator with a visual record of the density of the survey and the relative positons of the survey 'runs'. The micro-processor 56 and plotter 54 are in circuit and together comprise the shore station.

Positional accuracy is found to be much greater than that afforded by other systems and the resolution of the shore instrument is $\pm$ 2" in both the horizontal and vertical modes i.e. one millimeter in 100 meters when reading to a static target. To a dynamic target the accuracy is $\pm$ 0.2 to 0.3 meters in position and $\pm$ 0.1 meters vertically.

The level of the sea-bed is related directly to the shore station height by the measured depth below the collimation height of the instrument thus obviating the necessity to monitor tide levels.

By use of the above-described apparatus, the data can be formatted to produce, for example, navigational charts for slipping lanes, longitudinal and cross-sections of channels and harbours, morphometric calculations in pre- and post-dredging surveys, channel identification, buoy positions and shoals.

For marker buoy placement, where pin point accuracy is required, co-ordinates of the centres of the dropping zones can be fed to the computer and the craft automatically steered to these positions.

Detecting shoals and hazards by running ahead of deep draught vessels is an application which may prove a vital contribution to safety in navigating uncharted or otherwise dangerous waters.

## CLAIMS

1. Hydrographic survey apparatus includes in combination an echo-sounder and a telemetry unit in circuit, together with a target prism arrangement for location on board a water craft which is power driven and directionally manouvrable, and power means to energise said circuit.

2. Apparatus as claimed in Claim 1, wherein the echo-sounder, telemetry unit and target prism arrangement are housed in a module removably located in said craft.

3. Apparatus as claimed in Claim 1 or 2, wherein the power means are located in said module.

4. Apparatus as claimed in Claim 1,2 or 3, wherein the craft is navigated by remote radio control from a position-fixing instrument positioned on shore.

5. Apparatus as claimed in Claim 4, wherein an electronic tacheometer is provided to send signals to the arrangement.

6. Apparatus as claimed in Claim 2,3,4 or 5, wherein the target prism arrangement is carried at the top of an extendible mast.

7. Apparatus as claimed in any one of the preceding claims, wherein a micro-processor and graph plotter are in circuit with the tacheometer, and the telemetry unit and tacheometer are simultaneously activated by a signal from said micro-processor and readings obtained and plotted.

8. Hydrographic survey apparatus substantially as hereinbefore described with reference to the accompanying drawings.

# Fig.1.

0156529

*Fig.2.*

Fig.3.

Fig.4.

European Patent
Office

**EUROPEAN SEARCH REPORT**

0156529

. Application number

EP 85 30 1369

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 124 285 (RAYTHEON COMPANY)<br>* Figure 1; page 2, line 28 - page 3, line 16; page 4, lines 24-38 * | 1,2,4-7 | G 01 C 13/00<br>G 01 S 15/88<br>G 01 S 17/42<br>B 63 B 49/00 |
| | --- | | |
| Y | DE-A-3 128 433 (FRIED KRUPP)<br><br>* Figure 1; page 7, line 1 - page 9, line 4; page 11, lines 14-32; page 22, lines 11-17 * | 1,2,4-7 | |
| | --- | | |
| Y | US-A-3 989 216 (DON W.VEATCH)<br>* Figures 1,2,5; column 1, line 29 - column 3, line 57; column 6, lines 10-25 * | 2 | |
| | --- | | TECHNICAL FIELDS SEARCHED (Int. Cl.4) |
| Y | DE-B-1 029 713 (ELECTROACUSTIC)<br>* Figures; column 1, lines 1-6; column 2, line 45 - column 3, line 7 * | 4,7 | G 01 C<br>G 01 S<br>G 10 K<br>B 63 B<br>B 63 G |
| | --- | | |
| A | PATENTS ABSTRACTS OF JAPAN, vol. 1, no. 136, 10th November 1977, page 6503 E 77; & JP - A - 52 73062 (FUJITSU K.K.) 18-06-1977 | | |
| | --- | | |
| A | US-A-3 890 840 (R.J.MALLOY) | | |
| | ----- | | |

The present search report has been drawn up for all claims

| Place of search | Date of completion of the search | Examiner |
|---|---|---|
| THE HAGUE | 04-06-1985 | CANNARD J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82